Europäisches Patentamt

(19) European Patent Office

Office européen des brevets

(11) Publication number: **0 219 217**
**B1**

# (12) EUROPEAN PATENT SPECIFICATION

(45) Date of publication of patent specification: **04.04.90**

(21) Application number: **86306742.7**

(22) Date of filing: **01.09.86**

(51) Int. Cl.⁵: **F 16 B 11/00, C 09 J 5/00**

(54) Fixture for securing an adhesive attachment to a substrate.

(30) Priority: **04.09.85 US 772610**
**15.05.86 US 863620**

(43) Date of publication of application:
**22.04.87 Bulletin 87/17**

(45) Publication of the grant of the patent:
**04.04.90 Bulletin 90/14**

(84) Designated Contracting States:
**BE CH DE FR GB IT LI NL SE**

(56) References cited:
**DD-A- 137 001**
**DE-A-2 841 813**
**US-A-3 022 814**
**US-A-3 078 912**
**US-A-4 338 151**

(73) Proprietor: **PHYSICAL SYSTEMS INC.**
**2151 Lockheed Way**
**Carson City Nevada 89702 (US)**

(72) Inventor: **Hutter, Charles G. (III)**
**4110 County Line Road Carson City**
**Nevada 89701 (US)**

(74) Representative: **Frankland, Nigel Howard et al**
**FORRESTER & BOEHMERT Widenmayerstrasse**
**4/I**
**D-8000 München 22 (DE)**

Courier Press, Leamington Spa, England.

**Description**

· This invention relates generally to adhesive attachment assemblies or fixtures and related methods for securing an adhesive attachment or the like onto a supporting surface or substrate. More specifically, this invention relates to improvements in such adhesive attachment assemblies or fixtures particularly of the type described and claimed in U.S. Patents 4,302,492; 4,338,151; and 4,390,576.

In many instances, it is necessary or desirable to attach an element such as a patch, threaded screw stud, or the like onto a supporting substrate by means of an adhesive connection or bond. For example, it may be necessasry to apply a thin patch to the skin of an aircraft or the hull of a boat to repair a hole therein. Alternatively, it may be desirable to mount a threaded screw or other device onto a substrate such as the windscreen of a motor car without requiring a hole to be made in the substrate. As another alternative, in many modern aerospace applications, it is frequently desirable to attach a threaded stud or the like onto a nonmetallic substrate without forming a hole or otherwise interrupting the substrate, wherein the stud provides a mounting device for an item such as cable clamp, etc. In many such cases, it is necessary for the attachment to be located on the substrate with relatively high precision and further that a positive force be applied urging the attachment against the substrate for at least some minimum initial time period to allow, for example, curing of an adhesive material to achieve a relatively secure bond with the substrate.

In the past, many different clamp and fixture devices have been proposed for use in temporarily holding an adhesive attachment on the surface of a substrate during the cure time of an adhesive material. The majority of such clamp and fixture devices have required some form of mechanical connection to the substrate by means of screws or other mechanical fasteners, clamping jaws, etc. However, these devices are not suited for use with extended surface areas or fragile or thin-walled substrates within which surface interruptions to accommodate mechanical fastenings are not possible or are undesirable. Other devices have been proposed which rely upon suction cups for holding an attachment in position on a substrate, but suction cup devices are limited to use with substrates having smooth surface finishes and further only function to retain the attachment in place without exerting significant positive forces urging the attachment against the substrate. As a result, with suction cup devices, the adhesive material on the substrate can be unevenly distributed and/or cure with less than optimum bonding strength. Still other proposed devices utilize inflatable air bags or bladders held adhesively onto the substrate to bear against an attachment, but such flexible bladders also lack the requisite structural integrity to apply a uniform force to the attachment and thus do not prevent uneven distribution of a bonding agent at the attachment/substrate interface.

Some attachment devices are described and claimed in U.S. Patents 4,302,492; 4,338,151; and 4,390,576. More particularly, these patents disclose attachment devices having a support fixture adapted to be temporarily secured to the substrate by means of a pressure-sensitive adhesive or the like and force-bias or spring means for applying a force urging an attachment into positive bearing engagement with the substrate. The support fixture or a component thereof is movable between a first position with the adhesive attachment substantially out of bearing engagement with the substrate to a second position with the attachment pressed against the substrate. An over-centre type annular spring plate constitutes the movable component in most of the described embodiments.

The present invention relates to further improvements in adhesive attachments and mounting fixtures therefor.

According to one aspect of the invention there is provided a fixture for use in securing an attachment to a substrate comprising a support frame formed as a one-piece component integrally moulded from a single material, said support frame including connector means for releasable securement to the substrate, retainer means for releasably carrying the attachment, and means supporting said retainer means for movement relative to said connector means from a first position to a second position for urging the attachment with a positive force into bearing engagement with the substrate when said connector means is secured to the substrate.

In one embodiment said support frame comprises an outer support cylinder, said connector means comprising a radially extending flange at one axial end of said support cylinder, said support frame comprises an inner generally cylindrical pressure sleeve, supported by said supporting means generally coaxially within said outer support cylinder (18), said retainer means (34) comprising means on said pressure sleeve for releasably carrying the attachment.

Preferably said supporting means comprises a plurality of spokes interconnecting said outer support cylinder and said inner pressure sleeve, said spokes extending in a normal first position radially inwardly from said support cylinder and axially in a direction away from said flange to support said pressure sleeve in a position with an end margin thereof spaced from the substrate when said support frame is secured to the substrate, said pressure sleeve being movable realtive to said outer support cylinder to move said spokes overcentre to a position extending radially inwardly from said support cylinder and in an axial direction toward the substrate, at least one of said support cylinder and said pressure sleeve resiliently accommodating overcentre movement of said spokes and applying hoop stress to said spokes in said second position to urge the attachment carried by said pressure sleeve with a positive force against the substrate.

Said plurality of spokes may comprise three spokes equiangularly arranged generally in a common plane, and said spokes may have reduced cross-sectional thickness generally at their junctures with said support cylinder and said pressure sleeve.

Said plurality of spokes may comprise a first set of at least three equiangularly arranged spokes generally in a common plane and a second set of at least three equiangularly arranged spokes disposed generally in a common plane and axially spaced from said first set.

In an alternative embodiment said support means comprises a central spring plate dished centrally in a direction toward the substrate when said spring plate is in said first position, said spring plate supporting the attachment, in a position oriented to land upon the substrate prior to said connector means upon movement thereof toward the substrate, said spring plate being movable to said second position upon further movement of the connector means toward the substrate to land said connector means thereon.

The fixture may be associated with an installation tool for placing said mounting fixture while supporting the adhesive attachment onto the substrate, said installation tool including means for moving said connector means into at least temporary connection with the substrate and for substantially concurrently permitting displacement of said spring plate from said first position to said second position.

According to another aspect of this invention there is provided a mounting fixture for mounting an adhesive attachment onto a substrate, comprising:

spring means for supporting the adhesive attachment said spring means being normally in a first position and movable to a second position; and

connector means carrying said spring means and having means for at least temporary connection of said connector means to the substrate, said connector means carrying said spring means in said first position with the attachment oriented to land upon the substrate prior to said connector means upon movement thereof toward the substrate, said spring means being movable to said second position upon further movement of said connector means toward the substrate to land said connector means thereon;

said spring means applying a positive force when in said second position pressing the attachment toward the substrate.

According to a further aspect of this invention there is provided apparatus for use in securing a plurality of attachments to a substrate, the attachments being carried by a respective plurality of fixtures interconnected by breakable runners and said fixtures each having connector means for releasable securement to the substrate, retainer means carrying the associated attachment, and over-centre means supporting the retainer means for movement from a first position with the attachment substantially out of bearing engagement with the substrate when the connector means is secured thereto to a second position with the attachment urged with a positive force against the substrate, said apparatus comprising:

an installation head including means for advancing the fixtures carried by the runners in sequence to an installation position; and

punch means for separating the fixture at said installation position from the runners, said punch means further including means for securing the connector means of the separated fixture to a substrate in proximity with said installation head and then for switching the retainer means of said separated fixture from the first position to the second position.

Preferably said apparatus includes means for applying an adhesive material to the attachment carried by each of said fixtures.

Conveniently said punch means comprises a die plate having an opening therein for passage of one of said fixtures, a first punch piece for displacing the fixture at said installation position through the die plate to separate said fixture from said runners and to secure the connector means of said separated fixture onto the substrate, and a second punch piece for displacing the retainer means of said separated fixture from said first position to said second position.

In accordance with the invention, an improved fixture is provided for quickly, easily, and accurately securing an attachment onto a substrate by means of an adhesive or the like. The fixture comprises a support frame adapted for high volume, relatively low cost production as a one-piece component, for example, molded plastic. The support frame is associated with connector means such as a pressure sensitive adhesive, for temporary securement to the substrate and includes retainer means for releasably carrying the attachment to be applied to the substrate. The support frame is movable from a first position in which either the attachment or the fixture is substantially out of engagement with the substrate to a second position with the fixture adhered to the substrate and urging the attachment with a positive force into firm bearing contact with the substrate.

In one preferred form of the invention, the support frame comprises an outer support cylinder having a radially oriented flange at one end coated with a pressure-sensitive adhesive or the like for temporary securement to the substrate. The outer support cylinder is joined integrally by a plurality of spokes with an inner, preferably coaxial pressure sleeve, wherein the spokes project radially inwardly from the outer support sleeve and angularly in an axial direction away from the flange. The pressure sleeve in turn carries the retainer means which, in one form, comprises an inwardly radiating, yieldable annular lip for releasably supporting an attachment, such as a threaded screw, having an enlarged footplate to be adhesively attached to the substrate.

In use, an appropriate adhesive material is applied to the underside of the attachment footplate, and/or to the substrate, and the flange on the outer support cylinder is temporarily adhered to the substrate. The pressure sleeve is then pressed axially toward the substrate to move the spokes past an overcentre condition thereby displacing the attachment from a first position substantially out of bearing contact with the substrate to a second position with the underside of the footplate engaging the substrate. The outer support cylinder and/or the pressure sleeve deform slightly from a cylindrical configuration during this movement but return elastically to substantially cylindrical geometries when the second position is reached to provide hoop stresses to the spokes for urging the attachment with a positive force toward the substrate.

Orientation of the attachment can be maintained relative to the substrate by maintaining sleeve orientation within the support cylinder during pressure sleeve movement toward the second position. More particularly, the support frame may further include guide means spaced axially from the spokes for cooperation with the spokes to maintain the pressure sleeve coaxially within the support frame. In one preferred form, the guide means comprises a second plurality of spokes which are desirably offset angularly relative to the remaining spokes to facilitate molding of the support frame as a one-piece component. Alternate guide means may include spacer fins or the like for maintaining coaxial spacing between the outer support cylinder and the pressure sleeve.

After the adhesive material has cured sufficiently, the support frame is removed from the substrate with the attachment releasing from the retainer means to remain in place on the substrate. In one form of the invention, support frame removal is facilitated by a score formed in the connector flange and associated with a pull tab sized for an easy grasping and twisting motion to separate the connector flange from the substrate.

The fixture can be manufactured conveniently in a continuous roll of fixtures with interconnection runners to provide a plurality of fixtures which can be advanced serially to an installation head of automated or power-driven installation equipment. That is, the fixtures can be advanced automatically or semi-automatically into operative relation with a punch designed to separate the fixtures in sequence from the runners and to mount each fixture onto a substrate, followed by displacement of the pressure sleeve to advance the attachment into positive substrate engagement.

In another preferred yet simplified form, the mounting fixture comprises a dished central spring member or spring plate for carrying an adhesive attachment, and a connector rim at the periphery of the spring member carries adhesive means for at least temporary connection thereof onto the substrate. In use, the adhesive attachment assembly including the attachment and mounting fixture are displaced by an installation tool toward the substrate, with the spring member disposed in an unstressed or normal position carrying the adhesive attachment in a position leading the connector rim for placing the attachment onto the substrate prior to the connector rim. Further advancement of the installation tool toward the substrate applies a force acting through the attachment to deflect the spring member to a secondary, stressed position while the installation tool moves the fixture connector rim to at least temporary adhesive securement onto the substrate. Such securement of the connector rim functions to maintain the spring member in the secondary, stressed position wherein the spring member applies a positive force pressing the attachment toward the substrate for optimum bonding strength of a selected bonding agent at the attachment/substrate interface. The installation tool may include heat input means, vibratory means, or rotational means for activating the selected bonding agent concurrently with attachment placement onto the substrate.

In order that the invention may be more readily understood and so that further features thereof may be more readily understood the invention will now be described by way of example with reference to the accompanying drawings in which:

Figure 1 is a perspective view illustrating the top and one side of an attachment fixture embodying, in one form, the invention;

Figure 2 is a perspective view showing the bottom and one side of the attachment fixture of Fig. 1;

Figure 3 is a perspective view illustrating a threaded screw attachment secured onto a substrate;

Figure 4 is a fragmented vertical section illustrating the fixture of Fig. 1 temporarily mounted onto a substrate with a threaded screw attachment carried in a first position substantially out of bearing engagement with the substrate;

Figure 5 is a fragmented vertical section similar to Fig. 4 but illustrating the fixture in a second position with the attachment urged into bearing engagement with the substrate;

Figure 6 is a fragmented horizontal section taken generally on the line 6—6 of Fig. 4;

Figure 7 is a vertical sectional view similar to Fig. 5 but illustrating removal of the fixture from the substrate and the attachment;

Figure 8 is a perspective view similar to Fig. 1 but illustrating one alternative form of the invention;

Figure 9 is a vertical sectional view similar to Fig. 4 but illustrating another alternative form of the invention;

Figure 10 is another vertical sectional view similar to Fig. 4 but illustrating a further alternative form of the invention;

Figure 11 is a plan view illustrating a plurality of the fixtures of Fig. 1 interconnected by runners as a continuous molding;

Figure 12 is a diagrammatic view illustrating one form of an installation head for automated or powertool installation of fixtures onto a substrate;

Figure 13 is an enlarged fragmented elevational view illustrating a portion of the installation head of Fig. 12, and further depicting operation of the head for installing one of the fixtures onto the substrate;

Figure 14 is a perspective view illustrating an adhesive attachment assembly including a mounting fixture embodying another alternative form of the invention;

Figure 15 is a somewhat schematic diagram depicting use of the mounting fixture of Fig. 16 and an associated installation tool for mounting an adhesive attachment onto a substrate;

Figure 16 is a schematic diagram similar to Fig. 15 but showing the adhesive attachment assembly mounted upon the substrate;

Figure 17 is an enlarged schematic diagram similar to Fig. 15 and depicting a modified installation tool for use with a hot melt adhesive at the attachment/substrate interface;

Figure 18 is another schematic diagram similar to Fig. 15 but illustrating permanent attachment of the adhesive attachment assembly onto a substrate;

Figure 19 is an enlarged perspective and somewhat diagrammatic view illustrating an adhesive attachment having an encapsulated bonding agent on the underside thereof;

Figure 20 is an enlarged fragmented sectional and somewhat diagrammatic view generally corresponding with the encircled region 20 of Fig. 19;

Figure 21 is an enlarged fragmented sectional and somewhat diagrammatic view similar to Fig. 20 but illustrating use of an alternative bonding agent;

Figure 22 is a schematic diagram similar to Fig. 17 and illustrating another modified installation tool including vibratory means for activating a bonding agent; and

Figure 23 is a schematic diagram similar to Fig. 17 depicting still another modified installation tool having a rotational means for activating a bonding agent.

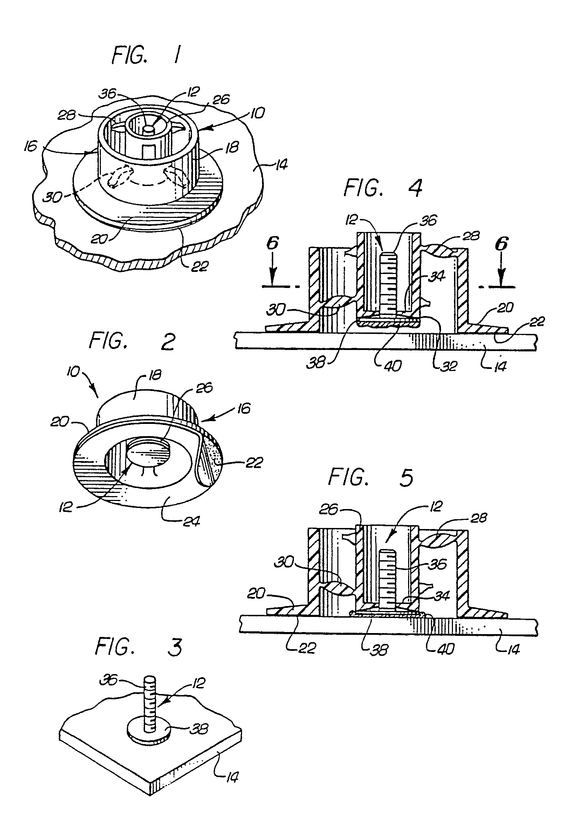

Referring initially to Figures 1 to 7 of the drawings, an attachment fixture referred to generally by the reference numeral 10 is provided for quickly, easily, and securely mounting an adhesive attachment 12 (Figure 3) onto a substrate 14. The fixture 10 is designed for temporary mounting onto the substrate 14 with the attachment 12 initially supported in a first position away from substantial bearing engagement with the substrate, whereupon a portion of the fixture 10 is movable quickly and easily to a second position carrying the attachment 12 into, and urged with a positive force toward substantial bearing engagement with the substrate. The fixture securely holds the attachment 12 against the substrate for the cure time of an adhesive material at the attachment/substrate interface, after which the fixture is removable quickly and easily to leave the attachment securely in place.

The fixture 10 comprises a support frame 16 adapted for convenient and cost-efficient, high volume manufacture as a one-piece component, for example, from molded plastic or the like. In some preferred forms, the fixture 10 includes means for controlling the orientation of the adhesive attachment 12 during movement toward the substrate 14 and throughout the cure period of an adhesive material to insure substantially optimum adhesive bonding with the substrate, as will be described in more detail. Still further, the use of foam or resilient pads for urging the attachment against the substrate may be avoided, if desired, to permit use of the fixture in relatively high temperature environments, such as with autoclave curable adhesives and the like.

As shown, the support frame 16 of the fixture comprises an outer support cylinder 18 having a radially outwardly extending enlarged connector flange 20 at the lower axial end thereof. The illustrated outer support cylinder 18 and the connector flange 20 are moulded integrally from a relatively lightweight molded plastic, such as polypropylene, polyvinyl chloride, polyethylene, acetyl copolymers, or any other suitable plastic material having at least a minor degree of structural resiliency. The connector flange 20 is sized to provide relatively broad surface contact area for contact with the substrate 14, as will be described, and can be formed with a thickness to conform readily with broadly curved or otherwise nonplanar surfaces, for example, the skin of an aircraft. The underside of the connector flange 20 is coated with a suitable adhesive layer 22, such as a layer of a pressure-sensitive adhesive. A removable sheet of release paper 24 (Fig. 2) is provided as an overlay for the pressure-sensitive layer 22 and is easily stripped therefrom when the fixture is ready for use.

The support frame 16 of the fixture 10 further includes an inner pressure sleeve 26 supported generally coaxially within the outer support cylinder 18. As shown, this pressure sleeve 26 is connected integrally with the support cylinder 18 by axially spaced sets of spokes, with three spokes per set being shown in the drawings. More particularly, an upper set of equiangularly arranged spokes 28 and a lower set of equiangularly arranged spokes 30 extend between the cylinder 18 and sleeve 26, wherein the upper set of spokes is angularly misaligned relative to the underlying lower set to facilitate molding as a one-piece component.

In the normal position as shown in Fig. 4, the upper and lower spokes 28 and 30 extend from the support cylinder 18 in radially inward directions toward the pressure sleeve 26 with axial components of direction extending at least slightly away from the connector flange 20. Accordingly, each of the spokes 28 and 30 has a longitudinal length somewhat greater than the radial distance between the cylinder 18 and the sleeve 26. In this normal position, the spokes 28 and 30 support the pressure sleeve 26 in a first position with its lower axial end margin 32 spaced above the plane of the pressure-sensitive adhesive layer 22 on the connector flange 20. Suitable retainer means, such as a compliant annular ring 34 protruding radially inwardly within the pressure sleeve 26 is provided to releasably support the attachment 12, with a threaded screw 36 being shown in the drawings by way of example. The lower end of this threaded screw is formed into an enlarged disk-shaped head or footplate 38 which is thus initially retained by the retainer ring 34 spaced slightly above the pressure-sensitive layer 22, or in any event, without substantial bearing contact with the substrate 14.

In use of the fixture 10, a suitable quantity of adhesive material 40 such as an epoxy resin or any other suitable adhesive material, is applied to the underside of the footplate 38. Alternately, the adhesive material 40 may be applied directly to a predetermined location on the substrate 14, to which the attachment 12 is to be adhered or to both the footplate and the substrate. The fixture 10 is then temporarily secured onto the substrate 14 at the selected location by removal of the release paper 24 and by pressing the connector flange 20 into secure contact with the substrate 14. During this temporary securement procedure, the pressure sleeve 26 remains in the first position, as viewed in Fig. 4, supporting the attachment footplate 38 spaced from or otherwise out of substantial bearing contact with the substrate 14.

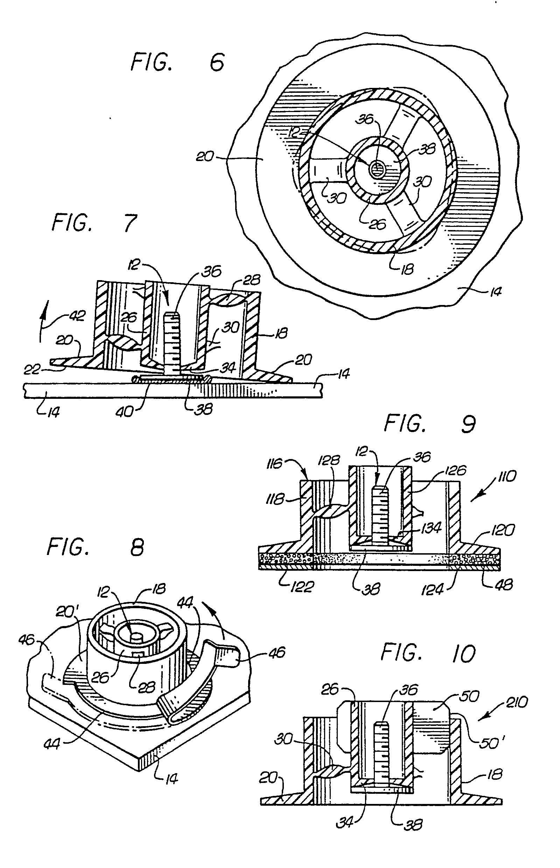

The attachment 12 is then mounted onto the substrate quickly and easily by pressing the pressure sleeve 26 in a direction toward the substrate 14. This motion is permitted by the somewhat resilient nature of the upper and lower spokes 28 and 30, and further by similar resilient structural properties of the outer support cylinder 18 and/or the inner pressure sleeve 26. More particularly, during this motion, the upper and lower spokes 28 and 30 temporarily expand the localized radial dimension between the cylinder 18 and pressure sleeve 26 and then move past over-centre positions to a second position shown in Fig. 5 extending radially inwardly from the cylinder 18 with axial components of direction extending toward the connector flange 20. This movement of the spokes is facilitated by shaping the spoke profiles to be relatively thinner at their junctures with the cylinder 18 and the sleeve 26, and further by localized deformation of the support cylinder 18 to a tri-lobe configuration, shown in dotted lines in Fig. 6, as the sets of spokes move past the over-centre position. The pressure sleeve may also be sized with a wall thickness to undergo localized deformation as the spokes move over-centre.

After the downward pressure sleeve motion displaces the spokes 28 and 30 beyond over-centre positions, the deformed support cylinder 18 and/or the pressure sleeve 26 return resiliently to substantially undeformed cylindrical states. This effectively applies hoop stresses to the spokes 28 and 30 which press and maintain the spokes toward the second position as viewed in Fig. 5. Importantly, these hoop stresses act through the spokes to press the pressure sleeve 26 and the attachment carried thereby with a positive force urging the footplate 38 against the substrate 14. Retention forces are thus applied to the adhesive material 40 causing the adhesive material to spread uniformly and in a relatively thin layer between the footplate and substrate. The fixture 10 is allowed to remain in place for a sufficient cure time while applying and maintaining the positive force against the attachment.

The upper and lower sets of spokes 28 and 30 cooperate to maintain the pressure sleeve 26 in generally coaxial alignment throughout pressure sleeve 26 in generally coaxial alignment throughout pressure sleeve movement between the first and second positions. That is, the set of upper spokes 28 cooperate to maintain an upper region of the pressure sleeve 26 in a coaxial relation to the support cylinder 18, whereas the three lower spokes 30 similarly cooperate to maintain a lower region of the pressure sleeve in a coaxial orientation within the support cylinder 18. These dual sets of spokes thus effectively prevent any significant angular displacement of the pressure sleeve and thereby maintain the attachment 12 oriented for movement substantially perpendicularly to the substrate and for footplate engagement substantially flush with the substrate. When the second pressure sleeve position is reached, the positive force maintaining the footplate against the substrate is substantially uniformly distributed to insure substantially uniform adhesive material distribution and cure strength, thereby providing optimum bonding with the substrate.

After sufficient curing of the adhesive material 40, the fixture 10 can be removed quickly and easily from the attachment 12 and the substrate 14. More specifically, with reference to Fig. 7 the fixture 10 can be lifted manually from the substrate 14 in the direction of arrow 42 to break the temporary adherence between the pressure-sensitive adhesive layer 22 on the connector flange 20 and the substrate 14. Removal of the fixture 10 is performed after the adhesive material 40 reaches a bonding strength exceeding the adherence forces of the pressure-sensitive layer and further exceeding any retention forces acting between the retainer ring 34 and the threaded screw 36. The fixture 10 can thus be separated from the attachment leaving the attachment in place on the substrate, as viewed in Fig. 3.

As shown in Fig. 8, in an alternative embodiment the fixture 10 can be formed with a modified connector flange 20' for facilitated fixture removal from a substrate after curing of the adhesive material 40. In this modified form, which can be otherwise identical with the embodiment shown in Figs. 1—7, the connector flange 20' is formed to include a spiral score 44 of reduced material thickness leading from the outer periphery of the flange to a point at or near the periphery of the support cylinder 18. A pull tab 46 at the outer extent of the spiral score 44 is not temporarily adhered to the substrate during fixation of an attachment 12 but is easily grasped after the fixture 10 is to be removed from the substrate to lift the connector flange 20' from the substrate 14 as an elongated strip while tearing the flange along the score 44. The fixture is thus easily removed from the substrate 14 with minimal stresses applied to the substrate, thereby minimizing risk of damage to the substrate.

A further alternative form of the invention is illustrated in Fig. 9. In this embodiment, a modified fixture 110 includes a support frame 116 including an outer support cylinder 118 carrying a lower connector flange 120 and joined integrally by a single set of preferably three equally spaced inwardly radiating spokes 128 to an inner pressure sleeve 126. A lower retaining ring 134 on the pressure sleeve 126 carries an attachment 12, such as a threaded screw 36 with a lower footplate 38. In the first or normal position, these spokes 128 extend in the axial direction at least slightly away from the connector flange 120 to support the attachment out of substantial bearing contact with the substrate, all as previously described with respect to Figs. 1—7.

In the embodiment of Fig. 9, the underside of the connector flange 120 supports a ring 48 of resilient foam or the like which is attached thereto in any suitable manner, as by use of a pressure-sensitive adhesive layer. A second pressure-sensitive adhesive layer 122 is applied to the underside of the foam ring 48 and a sheet of protective release paper 124 conveniently overlies the layer 122 prior to use. Alternately, the foam ring 48 can be omitted, if desired.

The fixture 110 is used generally as described with respect to the fixture 10 by removing the release paper 124 and temporarily adhering the foam ring 48 together with the connector flange 120 onto a substrate. The inner pressure sleeve 126 is then pressed toward the substrate to move the spokes 128 beyond an over-centre condition with the attachment pressed firmly against the substrate. While the single set of spokes 128 may not necessarily maintain precise angular orientation of the attachment relative to the substrate, the support frame 116 is nevertheless adapted for one-piece construction and will provide sufficient attachment orientation for many applications.

Still another embodiment of the invention is shown in Fig. 10, wherein a further fixture 210 is shown having a construction corresponding with the fixture 10 in Figs. 1—7, except that the upper set of spokes 28 (Fig. 1) are replaced by alternative guide means for maintaining the orientation of the pressure sleeve 26 relative to a substrate. More specifically, as shown in Fig. 10, a set of preferably three equally spaced spacer fins 50 are formed on the pressure sleeve 26 near the upper end thereof. These spacer fins 50 have radially outer edges 50' positioned for close sliding engagement with the inner surface of the outer support cylinder 18. Accordingly, the spacer fins 50 maintain an upper region of the pressure sleeve generally coaxially within the outer cylinder 18 to maintain the pressure sleeve orientation coaxially within the cylinder 18 during pressure sleeve movement toward a substrate (not shown in Fig. 10), as previously described with respect to Figs. 1—7. Alternately, the spacer fins 50 may be formed on the support cylinder 18 for sliding contact with the pressure sleeve 26, or substituted into the fixture in lieu of the lower set of spokes 30 while leaving the upper spokes 28 intact.

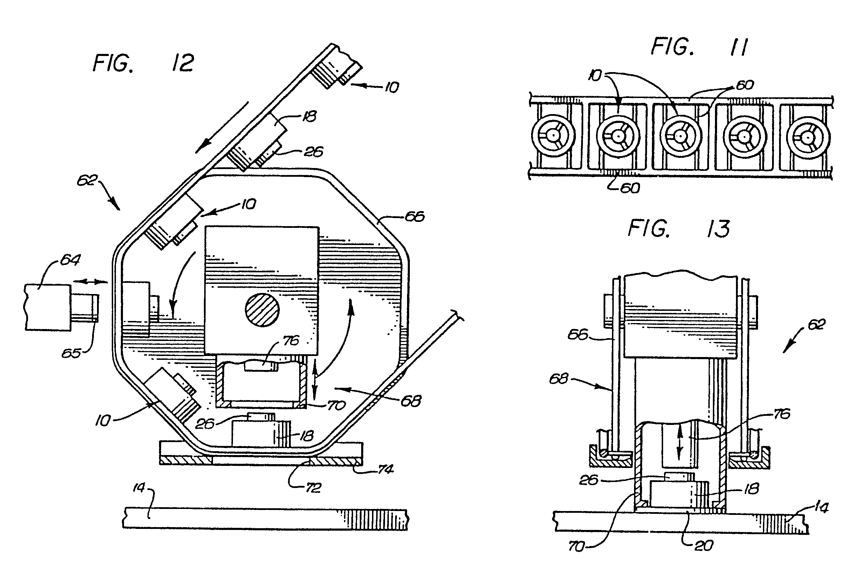

Any one of the fixture embodiments described herein above is adaptable for high volume production, for example, by chain or roll molding from a plastic material to provide a plurality of the fixtures interconnected to each other by lightweight, breakaway runners 60, as viewed in Fig. 11 with respect to a plurality of the fixtures 10. In this form, the fixtures can be installed in rapid sequence through the use of automated or semi-automated power tool equipment.

More specifically, as shown in Figs. 12 and 13, an elongated magazine or roll of the fixtures 10 interconnected by runners 60 can be fed to an installation head 62 of an automatic installation machine, or a manually held power installation tool or the like. This machine or implement can be provided with an applicator 64 having a head 65 of any suitable design for applying adhesive material to the underside of an attachment carried by each fixture 10 as it is advanced in succession, for example, by a drive roller 66 or the like. The fixtures are then advanced further into association with a two-part punch 68. As shown in Figs. 12 and 13, an outer punch piece 70 is initially advanced to push the underlying fixture downwardly through an opening 72 in a die plate 74 thereby severing the fixture from the breakaway runners 60 and pressing the fixture firmly against a substrate 14. In automated machinery, the substrate 14 can be carried in turn by suitable conveyor means (not shown) for appropriate advancement past the installation head 62.

With the fixture 10 secured onto the substrate, an inner punch piece 76 can be advanced, as shown in Fig. 13, to displace the inner pressure sleeve 26 from the first position to the second position. This moves the attachment 12 carried by the pressure sleeve of the fixture 10 into engagement with the substrate 14, while the spokes (not shown in Fig. 13) function to apply a positive force urging the attachment firmly against the substrate for the duration of an adhesive material cure period.

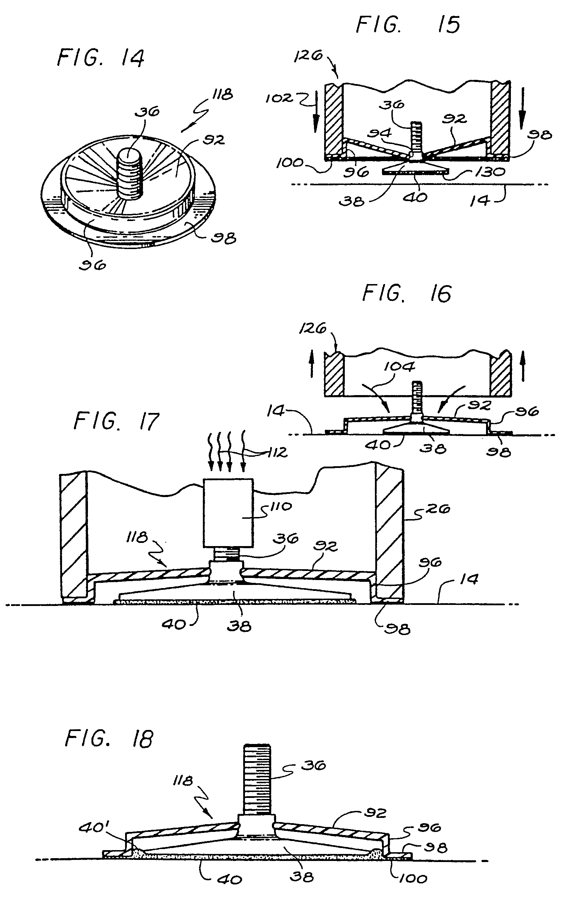

A further alternative form of the invention is shown in Figs. 14—18. As shown, this mounting fixture 118 comprises a normally dished spring plate 92 having a central opening 94 for receiving a threaded stud 36 or other projection on an adhesive attachment 12 of the general type shown, for example, in Fig. 3. The spring plate 92, which is preferably formed from a lightweight molded plastic or the like as a one-piece component, is joined at its periphery to one axial end of an annular ring 96 which is connected in turn at its opposite axial end to an outwardly radiating annular connector rim 98. One face of this connector rim 98 is presented toward a substrate 14 and is coated with an adhesive material preferably such as a pressure sensitive adhesive material 100 which may be protectively covered prior to use by a peel-off release paper (not shown). Importantly, as viewed in Fig. 15, the underside surface 130 of the adhesive attachment footplate 38 is coated with a selected bonding agent 40 and is normally positioned by the spring plate 92 in a plane advanced toward the substrate beyond the plane of the connector rim 98.

The mounting fixture 118 and associated adhesive attachment are installed quickly and easily onto the substrate 14 by an installation tool 126. More specifically, the tool 126 has a tubular forward end sized for reception of the ring 96 of the mounting fixture 118 and for engaging the axial face of the connector rim 98 opposite the adhesive coating 100. The installation tool 126 is advanced toward the substrate 14 in the direction of arrows 102 in Fig. 15 with the underside surface 130 of the footplate 38 leading relative to the adhesive layer 100. The attachment footplate 38 thus lands on the substrate prior to the connector rim 98 while installation tool advancement toward the substrate continues. As a result, the spring plate 92 is deflected until the connector rim 98 is secured at least temporarily to the substrate 14 by means of the pressure sensitive adhesive 100. This displaces the spring plate 92 from an initial position to a secondary stressed position wherein the spring plate applies a positive force pressing the attachment toward the substrate, as depicted by arrows 103 in Fig. 16. In this manner, the bonding agent at the attachment/substrate interface is forced intimately into the interstices of the structures at the interface with a uniform force applied across the interface throughout a cure period thereby achieving a substantially optimum bonding strength. After curing of the bonding agent, the mounting fixture 118 may be stripped from the substrate leaving the attachment in place bonded onto the substrate. Alternatively, if desired, the fixture 118 can be formed in groups as described with respect to Figs. 11—13 for installation in an automated manner.

If desired, the installation tool 126 or the installation head 62 may be adapted for use with various types of bonding agents. For example, as viewed in Fig. 17 with respect to the tool 126, the bonding agent 40 at the attachment/substrate interface may comprise a hot melt or thermoset adhesive material. In this case, the installation tool 126 may include a heating element 110 connected, for example, to the metal stud 36 for applying heat energy input thereto as depicted by arrows 112. The stud conducts the input heat downwardly to the attachment/substrate interface to activate the hot melt bonding agent prior to installation tool withdrawal.

As viewed in Fig. 18, the amount of the bonding agent 40 applies to the attachment/substrate interface may be varied to insure permanent mounting fixture attachment to the substrate for some specialized applications. For example, an excess of the bonding agent 40 can be applied to the attachment/substrate interface to insure radially outward extrusion of a bead 40' of the bonding agent into an annular space between the attachment footplate 38 and the radially inner diameter surface of the mounting fixture connector ring 96. When cured, the bonding agent bead 40' securely bonds the mounting fixture 118 to the attachment footplate 38 and thereby maintains the mounting fixture in a position to protect and shield the attachment footplate. If desired, the mounting fixture may be constructed from a suitable material designed to seal the attachment/substrate interface against undesired outgassing from attachment components.

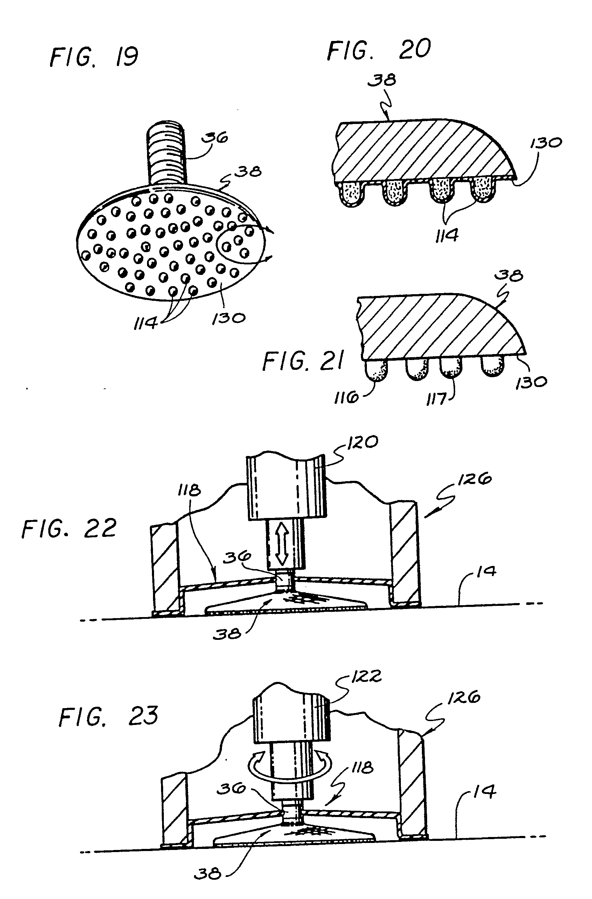

Still other alternative bonding agent compositions can be used, with the installation tool 126 or the head 62 being adapted for facilitated mounting of the adhesive attachment and activation of the bonding agent. For example, as viewed in Figs. 19 and 20, encapsulated beads 114 of the bonding agent may be applied to the underside surface 130 of the attachment footplate 38, wherein such bonding agent is activated for curing by rupturing of the beads for exposure of the bonding agent to air and/or moisture within the air. Alternatively, as viewed in Fig. 21, discrete beads 116 and 117 of different bonding agent compositions may be applied to the underside of the footplate 38, wherein intermixing of the two components initiates a curing process.

The bonding agents shown in Figs. 19—21 may be activated by modification of the installation tool 126, for example, to insure bead rupture or component intermixing incident to attachment placement upon a substrate 14. For example, as viewed in Fig. 22, the installation tool 126 may include vibratory means such as an ultrasonic vibratory head 120 for connection to the attachment 10 as by connection to the threaded stud 36 or other appropriate structure. The attachment footplate 38 is thus vibrated at an ultrasonic frequency as it is moved by the installation tool into landed contact upon the substrate, thereby activating the bonding agent on the underside surface thereof. Alternatively, as viewed in Fig. 23, the installation tool 126 may be provided with rotational means such as a rotary head 122 secured to the attachment stud 36 or other structure for rotation of the attachment after landing upon the substrate. The attachment is rotated through a sufficient angular displacement to rupture and/or intermix the bonding agent to initiate activation of bonding agent curing.

The improved fixture of the present invention is thus adapted for cost-efficient, high volume production, preferably as a one-piece plastic molding. The fixture is designed for rapid temporary securing to a substrate in combination with quick and easy movement of a portion of the fixture to a position forced against substrate. In some embodiments, means are provided for maintaining attachment orientation relative to the substrate, and means can be provided to facilitate fixture removal from a substrate subsequent to attachment installation.

The features disclosed in the foregoing description, in the following claims and/or in the accompanying drawings may, both separately and in any combination thereof, be material for realising the invention in diverse forms thereof.

## Claims

1. A fixture (10) for use in securing an attachment (12) to a substrate (14), comprising:
a support frame (16) including connector means (20) for releasable securement to the substrate, retainer means (34) for releasably carrying the attachment, and means (28, 30) supporting said retainer means for movement relative to said connector means from a first position to a second position for urging the attachment with a positive force into bearing engagement with the substrate when said connector means is secured to the substrate; characterised by said support frame being formed as a one-piece component integrally moulded from a single material.

2. The fixture of claim 1 further including temporary securement means (22) for temporarily securing said connector means to the substrate.

3. The fixture of claim 2 wherein said temporary securement means comprises a layer of a pressure-sensitive adhesive (22) applied to said connector means (20).

4. The fixture of claim 3 further including a sheet of release paper (24) overlying said pressure-sensitive adhesive layer (22).

5. The fixture of any one of the preceeding claims formed from a molded plastic material.

6. The fixture of any one of the preceeding claims wherein said support frame (16) comprises an outer support cylinder (18), said connector means comprising a radially extending flange (20) at one axial end of said support cylinder, said support frame comprising an inner generally cylindrical pressure sleeve (26), supported by said supporting means generally coaxially within said outer support cylinder (18), said retainer means (34) comprising means on said pressure sleeve for releasably carrying the attachment.

7. The fixture of claim 6 wherein said flange (20) extends radially outwardly from said one axial end of said outer support cylinder (18).

8. The fixture of claim 6 or 7 wherein said supporting means comprises a plurality of spokes (28, 30) interconnecting said outer support cylinder (18) and said inner pressure sleeve (26), said spokes extending in a normal first position radially inwardly from said support cylinder and axially in a direction away from said flange (20) to support said pressure sleeve in a position with an end margin (32) thereof spaced from the substrate when said support frame is secured to the substrate (14), said pressure sleeve being movable relative to said outer support cylinder to move said spokes over-centre to a second position extending radially inwardly from said support cylinder and in an axial direction toward the substrate, at least one of said support cylinder and said pressure sleeve resiliently accommodating over-centre movement of said spokes and applying hoop stress to said spokes in said second position to urge the attachment carried by said pressure sleeve with a positive force against the substrate.

9. The fixture of claim 8 wherein said plurality of spokes (30) comprises three spokes equiangularly arranged generally in a common plane.

10. The fixture of claim 8 or 9 wherein said spokes (28, 30) have reduced cross-sectional thickness generally at their junctures with said supaport cylinder and said pressure sleeve.

11. The fixture of claim 8, 9 or 10 further including guide means (50) cooperating between said support cylinder and said pressure sleeve for maintaining a region of said pressure sleeve generally coaxially within said support cylinder, said guide means being axially spaced from said spokes.

12. The fixture of claim 11 wherein said guide means, (50) comprises a plurality of spacer vanes on one of said support cylinder (18) and pressure sleeve (26) and extending radially for sliding engagement with the other of said support cylinder and pressure sleeve.

13. The fixture of claim 8, 9 or 10 wherein said plurality of spokes comprises a first set of at least three equiangularly arranged spokes (28) generally in a common plane and a second set of at least three equiangularly arranged spokes (30) disposed generally in a common plane and axially spaced from said first set.

14. The fixture of claim 13 wherein said spokes of said first set (28) are angularly offset relative to said spokes of said second set (30).

15. The fixture of any one of claims 6—14 wherein said flange (20) has a score (44) formed therein to facilitate tearing of said flange and removal of said support frame from securement to the substrate.

16. The fixture of claim 15 further including a pull tab (46) on said flange and associated with said score (44) to facilitate tearing of said flange (20).

17. The fixture of any one of claims 1 to 5 wherein said support means comprises a central spring plate (92) dished centrally in a direction toward the substrate when said spring plate is in said first position, said spring plate supporting the attachment (36), in a position oriented to land upon the substrate (14) prior to said connector means (98) upon movement thereof toward the substrate, said spring plate being movable to said second position upon further movement of the connector means toward the substrate to land said connector means thereon.

18. The fixture of claim 17 associated with an installation tool for placing said mounting fixture while supporting the adhesive attachment onto the substrate, said installation tool including means (126) for moving said connector means into at least temporary connection with the substrate and for substantially concurrently permitting displacement of said spring plate from said first position to said second position.

19. The fixture of claim 20 wherein said installation tool includes means (110, 120, 122) activating a bonding agent at the interface between the adhesive attachment and substrate to initiate curing of the bonding agent.

20. The mounting fixture of claim 19 wherein said activating means comprises an ultrasonic vibratory head (120).

21. The mounting fixture of claim 19 wherein said activating means comprises heat input means (110).

22. The mounting fixture of claim 19 wherein said activating means comprises a rotary head (122).

23. The fixture of any one of the preceeding claims wherein said fixture is formed as a one-piece plastic molding which further includes a plurality of identical fixtures interconnected by breakaway runners (60).

24. A mounting fixture according to any one of Claims 1 to 5 wherein said attachment is an adhesive attachment (38), said retainer means comprising:

spring means (92) for supporting the adhesive attachment (38) said spring means being normally in a first position and movable to a second position; and

wherein said connector means comprise an element (96) carrying said spring means (92) and having means (98) for at least temporary connection of said connector means to the substrate (14), said connector means carrying said spring means in said first position with the attachment oriented to land upon the substrate prior to said connector means upon movement thereof toward the substrate, said spring means being movable to said second position upon further movement of said connector means toward the substrate to land said connector means thereon;

said spring means applying a positive force when in said second position pressing the attachment toward the substrate.

25. Apparatus for use in securing a plurality of attachments (12) to a substrate, the attachments being carried by a respective plurality of fixtures (10) according to any one of the preceding Claims, the fixtures (10) being interconnected by breakaway runners (60) said apparatus comprising:

an installation head (68) including means for advancing the fixture carried by the runners in sequence to an installation position; and

punch means (76) for separating the fixture at said installation position from the runners, said punch means further including means for securing the connector means of the separated fixture to a substrate in proximity with said installation head and then for switching the retainer means of said separated fixture from the first position to the second position.

26. Apparatus as recited in claim 25 further including means (65) for applying an adhesive material to the attachment carried by each of said fixtures.

27. Apparatus as recited in claim 25 wherein said punch means comprises a die plate (74) having an opening (72) therein for passage of one of said fixtures, a first punch piece (70) for displacing the fixture at said installation position through the die plate to separate said fixture from said runners and to secure the connector means of said separated fixture onto the substrate, and a second punch piece (76) for displacing the retainer means of said separated fixture from said first position to said second position.

**Patentansprüche**

1. Befestigungsvorrichtung (10) zum Sichern eines auf einer Unterlage anzubringenden Elements (12), mit:

einem mit einem Verbindungsmittel (20) versehenen Stützrahmen (16) sur lösbaren Sicherung auf der Unterlage, einem Haltemittel (34) zum lösbaren Tragen des anzubringenden Elements und Mitteln (28, 30), die das Rückhaltemittel von einer ersten Position in eine zweite Position relativ zu dem Verbindungsmittel beweglich stützen, um das anzubringende Element mit einer bestimmten Kraft in eine Lagerverbindung mit der Unterlage zu zwingen, wenn das Verbindungsmittel an der Unterlage gesichert ist, dadurch gekennzeichnet, daß der Stützrahmen als eine einstückige Komponente ausgebildet ist, die aus einem einzigen Material integral ausgeformt ist.

2. Befestigungsvorrichtung nach Anspruch 1, weiter mit einem zeitweiligen Sicherungsmittel (22) zur zeitweisen Sicherung des Verbindungsmittels (22) an der Unterlage.

3. Befestigungsvorrichtung nach Anspruch 2, wobei das zeitweilige Befestigungsmittel eine Schicht aus einem druckempfindlichen Klebstoff (22) aufweist, die auf das Verbindungsmittel (20) aufgebracht ist.

4. Befestigungsvorrichtung nach Anspruch 3, weiter mit einem Blatt aus einem Abziehpapier (24), das auf der druckempfindlichen Schicht (22) aufliegt.

5. Befestigungsvorrichtung nach einem der vorangehenden Ansprüche, ausgeformt aus einem gegossenen Kunststoff.

6. Befestigungsvorrichtung nach einem der vorangehenden Ansprüche, wobei der Stützrahmen (16) einen äußeren Stützzylinder (18) aufweist, das Verbindungsmittel einen sich radial erstreckenden Flansch (20) an dem einen axialen Ende des Stützzylinders aufweist, der Stützrahmen eine innere, im wesentlichen zylindrische Druckmanschette (26) aufweist, die von den Stützmitteln im wesentlichen koaxial in dem äußeren Stützzylinder (18) gestützt werden, und wobei das Rückhaltmittel (34) ein Mittel auf der Druckmanschette zum lösbaren Tragen des anzubringenden Elements aufweist.

7. Befestigungsvorrichtung nach Anspruch 6, wobei der Flansch (20) sich von dem einen axialen Ende des äußeren Stützzylinders (18) radial nach außen erstreckt.

8. Befestigungsvorrichtung nach Anspruch 6 oder 7, wobei die Stützmittel eine Mehrzahl von den äußeren Stützzylinder (18) und die innere Druckmanschette (26) verbindende Speichen (28, 30) aufweist, die sich einer normalen ersten Position von dem Stützzylinder radial nach innen und axial in eine Richtung weg von dem Flansch (20) erstrecken, um die Druckmanschette in einer Position zu stützen, in der deren stirnseitiger Rand von der Unterlage beabstandet ist, wenn der Stützrahmen auf der Unterlage (14) gesichert ist, wobei die Druckmanschette relativ zu dem äußeren Stützzylinder beweglich ist, um die Speichen übermittig in eine zweite Position zu bewegen, in der sie sich von dem Stützzylinder radial nach innen und axial zu dem Substrat hin erstrecken, und wenigstens entweder der Stützzylinder oder die Druckmanschette die übermittige Bewegung der Speichen aufnehmen und in der zweiten Position eine Ringspannung auf die Speichen aufbringen, um das von der Druckmanschette getragene anzubringende Element mit einer bestimmten Kraft gegen die Unterlage zu pressen.

9. Befestigungsvorrichtung nach Anspruch 8, wobei die Mehrzhal von Speichen (30) drei Speichen aufweisen, die in im wesentlichen in einer Ebene mit gleichem Winkel zueinander angeordnet sind.

10. Befestigungsvorrichtung nach Anspruch 8 oder 9, wobei die Speichen (28, 29) im Bereich ihrer Verbindung mit dem Stützzylinder und der Druckmanschette im Querschnitt reduziert sind.

11. Befestigungsvorrichtung nach Anspruch 8, 9 oder 10, weiter mit Führungsmitteln (5), die zwischen dem Stützzylinder und der Druckmanschette zum Beibehalten eines Bereichs der Druckmanschette im wesentlichen koaxial in dem Stützzylinder wirken und axial von den Speichen beabstandet sind.

12. Befestigungsvorrichtung nach Anspruch 11, wobei die Führungsmittel (5) eine Mehrzahl von Abstandsflügeln an dem Stützzylinder (18) oder der Druckmanschette (26) aufweisen, die sich radial in Gleitverbindung mit der Druckmanschette bzw. dem Stützzylinder erstrecken.

13. Befestigungsvorrichtung nach Anspruch 8, 9 oder 10, wobei die Mehrzahl von Speichen einen ersten Satz von wenigstens drei mit gleichem Abstand voneinander im wesentlichen in einer gemeinsamen Ebene angeordneten speichen (28) und einen zweiten Satz von wenigstens drei mit gleichem Abstand voneinander in einer gemeinsamen Ebene mit Abstand von dem ersten Satz angeordneten Speichen (30).

14. Befestigungsvorrichtung nach Anspruch 13, wobei die Speichen des ersten Satzes (28) relativ zu den Speichen des zweiten Satzes (30) winklig versetzt angeordnet sind.

15. Befestigungsvorrichtung nach einem der Ansprüche 6 bis 14, wobei der Flansch (20) eine in diesem ausgebildete Kerbe zum Erleichtern des Abbrechens des Flansches und Entfernen des Stützrahmens von der Verbindung mit der Unterlage.

16. Befestigungsvorrichtung nach Anspruch 15, weiter mit einer Zuglasche (46) an dem Flansch, die der Kerbe (44) zugeordnet ist, um das Abziehen des Flansches zu erleichtern.

17. Befestigungsvorrichtung nach Anspruch 1 bis 5, wobei die Stützmittel eine zentrale Federplatte (92) aufweisen, die in der ersten Position zentral in einer Richtung auf die Unterlage zu ausgerichtet iste und die das anzubringende Element (36) in einer Position zum Aufbringen auf die Unterlage (14) vor dem Verbindungsmittel (98) bei dessen Bewegung auf die Unterlage stützt, wobei das Federmittel bei einer weiteren Bewegung des Verbindungsmittels in Richtung auf die Unterlage zum Aufbringen des Verbindungsmittel auf diese in eine zweite Position beweglich ist.

18. Befestigungsvorrichtung nach Anspruch 17 in Verbindung mit einem Installationswerkzeug zum Aufbringen der Befestigungsvorrichtung unter Stützung des Klebeelements auf die Unterlage, wobei das Installationswerkzeug ein Mittel (126) zum Bewegen des Verbindungsmittels in eine zumindest zeitweilige Verbindung mit dem Substrat und zum im wesentlichen gleichzeitigen Erlauben einer Verlagerung der Federplatte von der ersten Position in die zweite Position.

19. Befestigungsvorrichtung nach Anspruch 20, wobei das Installationswerkzeug Mittel (110, 120, 111) zum Aktivieren eines Klebstoffs an der Schnittstelle zwischen dem Klebeelement und der Unterlage aufweist, um das Aushärten des Klebstoffs zu initiieren.

20. Befestigungsvorrichtung nach Anspruch 19, wobei das Altivierungsmittel einen Ultraschall-Vibrationskopf (120) aufweist.

21. Befestigungsvorrichtung nach Anspruch 19, wobei das Aktivierungsmittel ein Hitzeaufbringungsmittel (110) aufweist.

22. Befestigungsvorrichtung nach Anspruch 19, wobei das Aktivierungsmittel einen Drehkopf (122) aufweist.

23. Befestigungsvorrichtung nach einem der vorangehenden Ansprüche, wobei die Befestigungsvorrichtung als einstückiges Kunststofformteil ausgebildet ist, das weitere eine Mehrzahl von durch Abbrechstreifen miteinander verbundenen identischen Befestigungsvorrichtungen aufweist.

24. Befestigungsvorrichtung nach einem der Ansprüche 1 bis 5, wobei das anzubringende Element eine Klebeelement (38) ist, wobei das Rückhalteelement aufweist:

Federmittel (92) zum Stützen des Klebeelements (38), die normalerweise in einer ersten Position sind und in eine zweite Position beweglich sind, und

Wobei das Verbindungsmittel ein das Federmittel (92) tragendes, mit Mitteln (98) zur wenigstens zeitweisen Verbindung des Verbindungsmittels mit dem Substrat versehenen Element aufweist und das Verbindungsmittel die Federmittel in der ersten Position mit einer Ausrichtung des anzubringenden Elements zum Aufbringen auf die Unterlage vor dem Verbindungselement bei dessen Bewegung auf die Unterlage trägt, wobei das Federmittel bei einer weiteren Bewegung des Verbindungsmittels in Richtung auf die Unterlage zum Aufbringen des Verbindungsmittel auf diese in eine zweite Position beweglich ist, und

das Federmittel in der zweiten Position eine bestimmte Kraft ausübt, die das anzubringende Element gegen die Unterlage preßt.

25. Apparat zum Sichern einer Mehrzahl von anzubringenden Elementen (12) auf eine Unterlage, die durch eine Mehrzahl von über abbrechbare Streifen (60) verbundenen Befestigungsvorrichtungen (10) nach einem der vorangehenden Ansprüche getragen werden, wobei der Apparat aufweist:

einen Installationskopf (68) mit Mitteln zum Weitertransportieren der von den Streifen getragenen Befestigungsvorrichtungen nacheinander in ein Installationsposition, und

Stanzmitteln (76) zum Trennen der Befestigungsvorrichtung an einer Installationsposition von den Streifen, die weiter mit Mitteln zum Sichern der Verbindungsmittel der abgetrennten Befestigungsvorrichtung auf einer Unterlage in der Nähe zu dem Installationskopf und zum anschließenden Umschalten des Haltemittels der abgetrennten Befestigungsvorrichtung von der ersten Position in die zweite Position.

26. Apparat nach Anspruch 25, weiter mit Mitteln (65) zum Aufbringen eines Klebstoffs auf die von den Befestigungsmitteln getragenen anzubringenden Elementen.

27. Apparat nach Anspruch 25, wobei das Stanzmittel eine Senkplatte (74) mit einer Öffnung in dieser zur Durchführung einer der Befestigungsvorrichtungen, ein erstes Stanzstück (70) zum Verlagern der Befestigungsvorrichtung an der Installationsposition durch die Senkplatte zum Abtrennen der Befestigungsvorrichtung von den Streifen und zum Sichern des Verbindungsmittels der abgetrennten Befestigungsvorrichtung auf der Unterlage, und ein zweites Stanzstück (76) zum Verlagern des Haltemittels der abgetrennten Befestigungsvorrichtung aus der ersten Position in die zweite Position.

**Revendications**

1. Elément de montage (10) destiné à être utilisé pour la fixation d'une attache (12) à un substrat (14), comprenant:

un cadre de support (16) comprenant des dispositifs de raccordement (20) assurant la fixation temporaire au substrat, un dispositif de retenue (34) destiné à supporter temporairement l'attache, et un dispositif (28, 30) de support du dispositif de retenue afin qu'il puisse se déplacer par rapport au dispositif de raccordement, d'une première à une seconde position, et qu'il repousse l'attache avec une force positive en coopération avec le substrat lorsque le dispositif de raccordement est fixé au substrat, caractérisé en ce que le cadre de support est formé d'un élément en une seule pièce, moulé en une seule pièce et en un seul matériau.

2. Elément de montage selon la revendication 1, comprenant en outre un dispositif de fixation temporaire (22) destiné à fixer temporairement le dispositif de raccordement au substrat.

3. Elément de montage selon la revendication 2, dans lequel le dispositif de fixation temporaire comprend une couche d'un adhésif (22) sensible à une pression, appliquée sur le dispositif de raccordement (20).

4. Elément de montage selon la revendication 3, comprenant en outre une feuille d'un papier anti-adhérent (24) placée sur la couche (22) de l'adhésif sensible à une pression.

5. Elément de montage selon l'une quelconque des revendications précédentes, formé d'une matière plastique moulée.

6. Elément de montage selon l'une quelconque des revendications précédentes, dans lequel le cadre de support (16) comporte un cylindre externe de support (18), le dispositif de raccordement comprend un flasque radial (20) formé à une première extrémité axiale du cylindre de support, le cadre de support comprend un manchon interne de pression (26) ayant une forme générale cylindrique, supporté par le dispositif de support en position coaxiale de façon générale à l'intérieur de l'autre cylindre de support (18), et le dispositif de retenue (34) comprend un dispositif placé sur le manchon de pression et destiné à supporter temporairement l'attache.

7. Elément de montage selon la revendication 6, dans lequel le flasque (20) dépasse radialement vers l'extérieur de la première extrémité axiale du cylindre externe de support (18).

8. Elément de montage selon la revendication 6 ou 7, dans lequel le dispositif de support comporte plusieurs rayons (28, 30) reliant le cylindre externe de support (18) au manchon interne de pression (26), les rayons étant disposés normalement dans une première position radialement à l'intérieur du cylindre de support et axialement à distance du flasque (20) afin qu'ils supportent le manchon de pression dans une position telle qu'une marge d'extrémité (32) du manchon est distante du substrat lorsque le cadre de support est fixé au substrat (14), le manchon de pression étant mobile par rapport au cylindre externe de support afin qu'il déplace les rayons au-delà d'une position centrée ver une seconde position dans laquelle ils dépassent radialement vers l'intérieur du cylindre de support et, en direction axiale, vers le substrat, le cylindre de support ou le manchon de pression au moins permettant élastiquement ce déplacement des rayons au-delà d'une position centrée et appliquant une contrainte circonférentielle aux rayons dans la seconde position afin que l'attache portée par le manchon de pression soit repoussée contre le substrat avec une force positive.

9. Elément de montage selon la revendication 8, dans lequel plusieurs rayons (30) sont sous forme de trois rayons régulièrement espacés circonfé- rentiellement dans un plan commun de façon générale.

10. Elément de montage selon la revendication 8 ou 9, dans lequel les rayons (28, 30) ont une épaisseur réduite en coupe de façon générale à leur raccord avec le cylindre de support et avec le manchon de pression.

11. Elément de montage selon la revendication 8, 9 ou 10, comprenant en outre un dispositif de guidage (50) coopérant avec le cylindre de support et le manchon de pression, placé entre eux et destiné à maintenir une région du manchon de pression en position générale coaxiale dans le cylindre de support, le dispositif de guidage étant disposé axialement à distance des rayons.

12. Elément de montage selon la revendication 11, dans lequel le dispositif de guidage (50) comporte plusieurs ailettes d'entretoise formées sur le cylindre de support (18) ou le manchon de pression (26) et dépassant radialement afin qu'elles puissent coulisser contre le manchon de pression ou le cylindre de support respectivement.

13. Elément de montage selon la revendication 8, 9 ou 10, dans lequel plusieurs rayons comprennent un premier ensemble d'au moins trois rayons régulièrement espacés en direction circonférentielle (28) de façon générale dans un plan commun, et un second ensemble d'au moins trois rayons régulièrement espacés en direction circonférentielle (30), disposés de façon générale dans un plan commun et distants axialement du premier ensemble.

14. Elément de montage selon la revendication 13, dans lequel les rayons du premier ensemble (28) sont décalés angulairement par rapport aux rayons du second ensemble (30).

15. Elément de montage selon l'une quelconque des revendications 6 à 14, dans lequel le flasque (20) a une entaille (44) formée afin qu'elle facilite la déchirure du flasque et l'extraction du cadre de support qui a été fixé au substrat.

16. Elément de montage selon la revendication 15, comprenant en outre une patte (46) de traction formée sur le flasque et associée à l'entaille (44) afin que la déchirure du flasque (20) soit facilitée.

17. Elément de montage selon l'une quelconque des revendications 1 à 5, dans lequel le dispositif de support comprend une plaque centrale élastique (92) bombée en son centre vers le substrat lorsque la plaque élastique est dans la première position, la plaque élastique supportant l'attache (36), dans une position orientée de manière qu'elle vienne s'appliquer sur le substrat (14) avant le dispositif de raccordement (98) lors du déplacement de celui-ci vers le substrat, la plaque élastique étant mobile vers la seconde position lors d'un déplacement supplémentaire du dispositif de raccordement vers le substrat afin que le dispositif de raccordement vienne s'appliquer sur lui.

18. Elément de montage selon la revendication 17, associé à un outil d'installation destiné à placer l'élément de montage tout en supportant l'attache adhésive sur le substrat, l'outil d'installation comprenant un dispositif (126) destiné à déplacer le dispositif de raccordement afin qu'il soit raccordé au moins temporairement au substrat, et à permettre de manière pratiquement simultanée un déplacement de la plaque élastique de la première à la seconde position.

19. Elément de montage selon la revendication 20, dans lequel l'outil d'installation comporte un dispositif (110, 120, 122) d'activation d'un agent de collage placé à l'interface de l'attache adhésive et du substrat afin que le durcissement de l'agent de collage commence.

20. Elément de montage selon la revendication 19, dans lequel le dispositif d'activation comprend une tête vibratoire ultrasonore (120).

21. Elément de montage selon la revendication 19, dans lequel le dispositif d'activation comprend un dispositif de chauffage (110).

22. Elément de montage selon la revendication 19, dans lequel le dispositif d'activation comporte une tête rotative (122).

23. Elément de montage selon l'une quelconque des revendications précédentes, dans lequel l'élément est formé de matière plastique moulée en une seule pièce qui comporte en outre plusieurs éléments identiques de montage raccordés par des jets de coulée (60) à casser.

24. Elément de montage selon l'une quelconque des revendications 1 à 5, dans lequel l'attache est une attache adhésive (38), et le dispositif de retenue comprend:

un dispositif élastique (92) destiné à supporter l'attache adhésive (38), ce dispositif élastique étant normalement dans une première position et étant mobile vers une seconde position, et

le dispositif de raccordement comporte un élément (96) portant le dispositif élastique (92) et ayant un dispositif (98) destiné à assurer le raccordement au moins temporaire du dispositif de raccordement au substrat (14), le dispositif de raccordement portant le dispositif élastique dans la première position alors que l'attache est orientée de manière qu'elle vienne s'appliquer sur le substrat avant le dispositif de raccordement lors du déplacement de celui-ci vers le substrat, le dispositif élastique étant mobile vers la seconde position lors d'un déplacement supplémentaire du dispositif de raccordement vers le substrat afin que le dispositif de raccordement vienne s'appliquer sur le substrat,

le dispositif élastique exerçant une force positive lorsqu'il est dans la seconde position et repoussant ainsi l'attache vers le substrat.

25. Appareil destiné à être utilisé pour la fixation de plusieurs attaches (12) à un substrat, les attaches étant portées par plusieurs éléments respectifs de montage (10) selon l'une quelconque des revendications précédentes, les éléments de montage (10) étant reliés par des jets de coulée (60) à casser, l'appareil comprenant:

une tête d'installation (68) comportant un dispositif destiné à faire avancer les éléments de montage portés par les jets de coulée successivement vers une position d'installation, et

un dispositif de poinçonnage (76) destiné à séparer l'élément de montage, dans la position d'installation, des jets de coulées, le dispositif de poinçonnage comportant en outre un dispositif destiné à fixer le dispositif de raccordement de l'élément séparé de montage sur un substrat à proximité de la tête d'installation puis à commuter le dispositif de retenue de l'élément séparé de montage de la première à la seconde position.

26. Appareil selon la revendication 25, comprenant en outre un dispositif (65) destiné à appliquer une matière adhésive sur l'attache portée par chacun des éléments de montage.

27. Appareil selon la revendication 25, dans lequel le dispositif de poinçonnage comporte une plaque de matriçage (74) ayant une ouverture (72) pour le passage de l'un des éléments de montage, une première pièce de poinçonnage (70) destinée à déplacer l'élément de montage en position d'installation à travers la plaque de matriçage afin que l'élément de montage soit séparé des jets de coulée et que le dispositif de raccordement de l'élément séparé de montage soit fixé sur le substrat, et une seconde pièce de poinçonnage (76) destinée à déplacer le dispositif de retenue de l'élément séparé de montage de la première position à la seconde position.

FIG. 1

FIG. 4

FIG. 2

FIG. 5

FIG. 3

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

4

FIG. 19

FIG. 20

FIG. 21

FIG. 22

FIG. 23